# EUROPÄISCHE PATENTSCHRIFT

(11) **EP 1 439 050 B1**
(45) Veröffentlichungstag und Bekanntmachung des Hinweises auf die Patenterteilung: **02.08.2006**
(21) Anmeldenummer: 03029510.9
(22) Anmeldetag: 20.12.2003
(51) Int. Cl.: B29C 67/00, B22F 3/105, B29C 41/12, B29C 41/36, B29C 37/02

(54) **Beschichtereinrichtung für eine Bauvorrichtung zur Herstellung von Formteilen aus Pulvermaterial**
Coating device for an apparatus for producing articles made of pulverulent material
Applicateur pour un appareil de fabrication de pièces produites à partir d'un matériau pulvérulent

(30) Priorität: 14.01.2003 DE 10300959
(43) Veröffentlichungstag der Anmeldung: 21.07.2004
(73) Patentinhaber: CL Schutzrechtsverwaltungs GmbH, 96215 Lichtenfels (DE)
(72) Erfinder: Herzog, Frank, 96215 Lichtenfels (DE)
(74) Vertreter: Hafner, Dieter

(56) Entgegenhaltungen:
- DE-A- 19 928 245
- DE-C- 19 853 978
- US-A- 5 730 925
- US-A- 6 136 257
- US-A1- 2002 090 410
- US-A1- 2002 152 002

## Beschreibung

Die Erfindung betrifft eine Beschichtereinrichtung für eine Bauvorrichtung zur Erstellung von Formteilen aus Baumaterial unter Einbringung von Strahlungsenergie, insbesondere für eine Lasersinteranlage oder eine Stereolithographieanlage. Bei derartigen Anlagen wird Baumaterial, nämlich Metallpulver und/oder Kunststoffpulver aus einem Vorratsbehälter in einen Bauraum verbracht. Die nach oben weisende Oberfläche des Bauraumes wird mit einer dünnen Pulverschicht versehen und kann durch einen über einen Scannerkopf geleiteten Laserstrahl oder eine andere geeignete Strahlungsenergiequelle verfestigt werden, so daß ein metallisches oder aus Kunststoff bestehendes Formteil entsteht.

Zum Transport des Baumaterials aus dem Vorratsbehälter in den Bauraum wird in der Regel eine Beschichtereinrichtung verwendet, die eine horizontal verfahrbare Klingenanordnung aufweist. Die Klingenanordnung kann aus zwei mit Abstand parallel zueinander befestigten Beschichterklingen bestehen, zwischen die durch Anheben des Bodens des Vorratsbehälters eine dosierbare Pulvermenge eingebracht wird. Durch horizontales Verfahren der Klingenanordnung wird das zwischen den Klingen befindliche Baumaterial über die zu beschichtende Oberfläche des Bauraumes gebracht und kann dort durch die Einwirkung der Strahlungsenergie verfestigt werden.

DE-A-19 928 245 offenbart eine Beschichtereinrichtung gemäß dem Oberbegriff des Anspruchs 1 und des Anspruchs 18.

Bei dem Verfestigungsvorgang, insbesondere beim vollständigen Aufschmelzen von Baumaterial kann es geschehen, daß sich auf der sich verfestigenden Oberfläche Materialspritzer festbacken, die deutlich über das durch die sonstige Oberflächenrauhigkeit bestimmte Oberflächenniveau hinausstehen. Dies führt in nachteiliger Weise dazu, daß beim nachfolgenden Beschichtungsvorgang die Beschichterklingen an derartigen ausgehärteten Vorsprüngen hängenbleiben können, wodurch auf die Beschichteranordnung Schläge ausgeführt werden, die in mehrfacher Hinsicht nachteilig sind. Zum einen kann es zu einer Beschädigung der Antriebsteile der Beschichteranordnung oder zu einer Beschädigung der Klingen kommen. Zum anderen Teil wirken sich die Schläge auf die Beschichteranordnung auch negativ auf die Gleichmäßigkeit des Beschichtungsvorganges aus, da auch dann, wenn bei Kontakt mit den Beschichterklingen der festgebackene Vorsprung wegbricht, die Beschichteranordnung schwingt oder vibriert und dadurch die Oberflächengüte der Beschichtung negativ beeinträchtigt wird.

Um ein möglichst glattes Beschichtungsergebnis zu erreichen, sind herkömmliche Beschichterklingen nicht scharf ausgebildet, sondern an ihren nach unten weisenden Kanten leicht gerundet, was einer gleichmäßigen Verteilung des Feinstpulvers zugute kommt. Aus diesem Grunde sind sie nicht geeignet, zum Abtrag von festgebackenen Vorsprüngen und dergleichen zu dienen.

Der Erfindung liegt die Aufgabe zugrunde, eine Beschichtereinrichtung mit den Merkmalen des Anspruches 1 derart auszubilden, daß beim Beschichtungsvorgang negative Auswirkungen durch vorstehende, festgebackene Teilchen vermieden werden können. Diese Aufgabe wird dadurch gelöst, daß der mindestens einen Beschichterklinge einer Klingenanordnung mindestens eine Abscherklinge zugeordnet ist, die vor oder beim Beschichtungsvorgang über die Baufläche verfahrbar ist, z. B. der Beschichterklinge in Transportrichtung des Pulvers voreilt. Alternativ dazu ist als Lösung vorgesehen, gemäß dem Anspruch 18, die Beschichterklinge als Abscherklinge zu verwenden und den relativen Abstand zwischen der zu beschichtenden Oberfläche und der wirksamen Scherkante der Beschichterklinge etwas zu vergrößern, dies führt dazu, daß die groben Agglomerate mit vergrößerter Hebelwirkung aus der Oberfläche der sich bildenden Schicht herausgerissen werden, aus diesem Grunde bleibt der Beschichter beim Beschichtungsvorgang nicht mehr hängen.

Die Abstandsvergrößerung kann dadurch vorgenommen werden, daß entweder die zu beschichtende Oberfläche abgesenkt oder die Beschichterklinge etwas angehoben wird, wobei natürlich auch eine Kombination dieser beiden Varianten möglich ist.

Wird die Beschichterklinge schräg zu ihrer Bewegungsbahn angestellt, kann entweder ein sogenannter "ziehender Schnitt" zu einem besseren Abscherergebnis führen, außerdem sorgt ein Aufeinandertreffen von großen Agglomeraten mit der Beschichterklinge bei schräg gestellter Beschichterklinge für eine weniger starke Beanspruchung der Beschichterklinge, so daß diese eine längere Standzeit aufweist.

Es hat sich gezeigt, daß dann, wenn in Laufrichtung vor der oder den Beschichterklingen eine scharfe Abscherklinge montiert wird, die aufgrund ihrer Schärfe und Härte geeignet ist, vorstehende Teilchen abzurasieren, der Beschichtungsvorgang deutlich verbessert wird. Im einfachsten Fall ist dem üblichen Beschichterklingenpaar außenseitig ein Abscherklingenpaar zugeordnet, das am Schlitten der horizontal verfahrbaren Beschichterklingenanordnung befestigt ist. Falls allerdings nur eine Beschichterklinge vorgesehen wird, kann es auch möglich sein, der einen Beschichterklinge beidseitig zwei Abscherklingen zuzuordnen.

Mit Vorteil ist jeder Beschichterklinge eine Mehrzahl von Abscherklingen zugeordnet, die der Höhe nach gestaffelt sein können.

Die nach unten weisende Kante einer jeden Beschichterklinge ist geringfügig tiefer angeordnet als die nach unten weisende Kante der zugehörigen Abscherklinge oder Abscherklingen. Es kann auch vorteilhaft sein, die Höhe der Abscherklinge(n), bezogen auf die Höhe der Beschichterklinge(n) verstellbar zu gestalten. Dann kann der dem Beschichtungsvorgang vorausgehende oder voreilende Abschervorgang an die jeweiligen Gegebenheiten (Energieeintrag, Pulverart) angepaßt werden.

Um zu vermeiden, daß sich die auf die Abscherklinge(n) einwirkenden Schläge allzusehr auf die Beschichterklingenanordnung übertragen, kann es vorteilhaft sein, die Abscherklingen unter Zwischenschaltung einer mechanischen Dämpfungseinrichtung an der Anordnung der Beschichterklingen zu befestigen. Es ist aber auch möglich, mindestens eine Abscherklinge an einer gesonderten Halterung mechanisch entkoppelt von der Beschichterklingenanordnung verfahrbar zu lagern. Grundsätzlich ist es sogar möglich, einer Klingenanordnung mit zwei Beschichterklingen nur eine Abscherklinge oder Abscherdoppelklinge zuzuordnen, die beidseitig außerhalb der Beschichterklingen der Klingenanordnung zur Voreilung in Transportrichtung des Pulvers positionierbar ist.

Es ist auch möglich, daß das Material der mindestens einen Abscherklinge eine höhere Shore-Härte aufweist als das der Beschichterklinge, damit die Abscherklinge eine sehr hohe Standzeit aufweist.

Grundsätzlich ist es auch vorteilhaft, den Abschervorgang zeitlich vom eigentlichen Beschichtungsvorgang zu trennen, da dann Vibrationen, die durch den Abschervorgang auf die gesamte Anlage übertragen werden können, abgeklungen sind und der eigentliche Beschichtungsvorgang ungestört durch solche Vibrationen vollzogen werden kann.

Die Abscherklingen sind austauschbar angeordnet, wobei die austauschbare Anordnung an jeder vorstehend bereits erwähnten Bauform mit Vorteil vorliegen kann. Der Antrieb der Abscherklingen sollte gesondert steuerbar sein, damit auf die Oberflächenrauhigkeit durch langsames oder schnelles Verfahren der Abscherklingen reagiert werden kann.

Die Abscherklingen können mit Vorteil an einem motorisch höhenverstellbaren Abscherklingenhalter befestigt werden, der an einem gesonderten horizontal verfahrbaren Schlitten gelagert ist. Dadurch ist es möglich, die Abscherklingenanordnung über die Klingenanordnung der Beschichterklingen von einer Seite auf die andere Seite hinwegzuheben. Alternativ ist es möglich, die Abscherklingenanordnung an einem verfahrbaren oder verschwenkbaren Arm zu haltern, der ebenfalls an einem gesonderten Schlitten befestigt sein kann, um die Abscherklingen von der Vorder- auf die Rückseite der Beschichterklingenanordnung und umgekehrt bringen zu können. Die Abscherklingen werden dann nicht über die Beschichterklingenanordnung gehoben, sondern durch horizontales Verfahren oder Verschwenken aus dem Weg der Beschichterklingenanordnung herausgefahren und auf der anderen Seite der Beschichterklingenanordnung wieder in ihre Arbeitsposition gebracht.

Durch eine Schrägstellung der Abscherklinge(n) wird ein "ziehender Schnitt" erreicht, der ein noch besseres Ergebnis herbeiführt.

Die Lehre des Anspruches 22 zielt darauf ab, die Beschichterklinge(n) beim Beschichtervorgang rechtwinklig zu ihrer Bewegungsbahn und bei einem Abschervorgang schräg zu ihrer Bewegungsbahn anstellen zu können. Die Verstellung erfolgt über einen nicht dargestellten motorischen Antrieb.

Die Erfindung ist anhand vorteilhafter Ausführungsbeispiele näher erläutert. Diese zeigen:
- Fig. 1: eine schematische Darstellung der für die Erfindung wesentlichen Komponenten einer Bauvorrichtung nach dem Stand der Technik zur Erstellung von Formteilen aus Baumaterial unter Einbringung von Strahlungsenergie, mit einer Beschichtereinrichtung mit zwei Beschichterklingen
- Fig. 2: eine vergrößerte Darstellung der Beschichtereinrichtung mit Pulverbehälter und Bauraum
- Fig. 3: eine Detailansicht der Beschichterklinge mit drei gedämpft gelagerten Abscherklingen
- Fig. 4: eine Beschichterklingenanordnung mit beidseitig angeordneten, gesondert steuerbaren Abscherklingen
- Fig. 5: einen schematischen Arbeitsablauf einer Vorrichtung gemäß Figur 4
- Fig. 6: eine Beschichterklingen- und Abscherklingenanordnung, bei der ein Abscherklingensatz über der Beschichterklingenanordnung verfahrbar angeordnet ist,
- Fig. 7: eine Abscherklingenanordnung in Schrägstellung.

Zeichnungsfigur 1 zeigt zunächst den üblichen Stand der Technik. Darin ist zunächst eine Bauvorrichtung 1 zur Erstellung von Formteilen 2 aus Baumaterial 3 unter Einbringung von Strahlungsenergie gezeigt, die durch einen Laser 4 erzeugt wird, wobei der Laserstrahl 5 über eine Scannereinrichtung 6 auf die Bauoberfläche 7 eines Bauraumes 8 abgelenkt wird. Eine derartige Anlage ist auch unter der Bezeichnung Lasersinteranlage geläufig, falls metallische Baumaterialien 3 verarbeitet werden. Das Baumaterial 3 wird über eine Beschichtereinrichtung 9 mit einer horizontal verfahrbaren Klingenanordnung 10 von einem Vorratsbehälter 11 in den Bauraum 8 verbracht, wobei das Baumaterial 3 durch eine nach unten weisende Kante 12 einer Beschichterklinge 13 als gleichmäßige Schicht auf der Baufläche 7 verteilt wird.

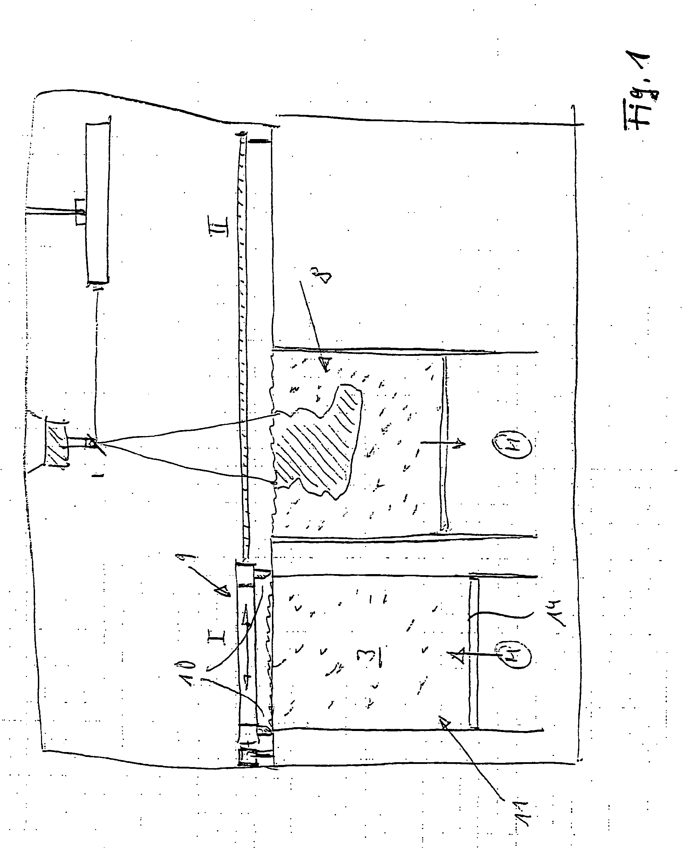

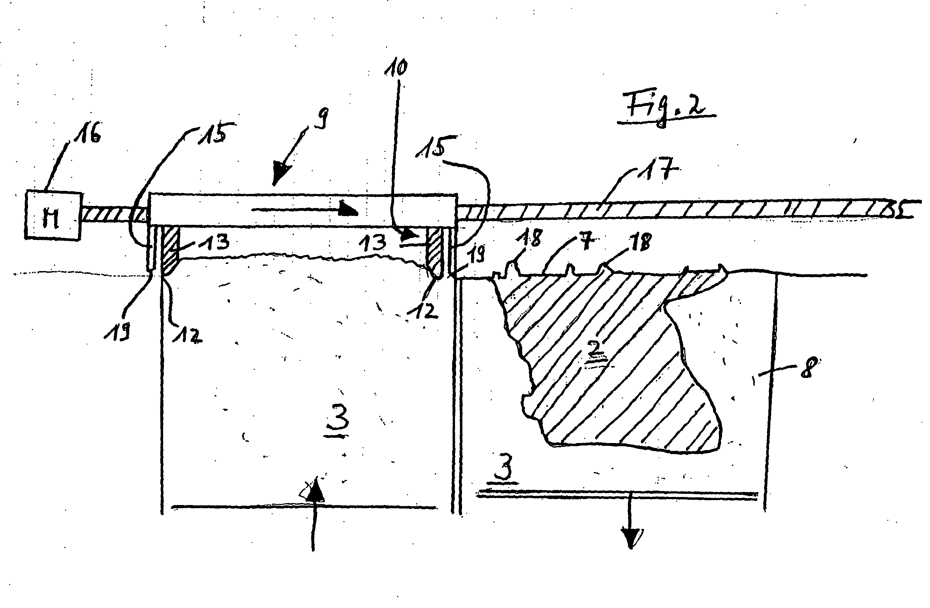

Beim dargestellten Ausführungsbeispiel ist die Beschichtereinrichtung 9 mit zwei Beschichterklingen 13 ausgestattet, die sich in gleicher Höhe mit Abstand parallel gegenüberliegen. In der in Figur 1 dargestellten Stellung der Beschichtereinrichtung 9 gelangt das Baumaterial 3 durch Anheben des Bodens 14 des Vorratsbehälters 11 zwischen die Beschichterklingen 13. Wird die Beschichtereinrichtung 9 aus der dargestellten Position nach rechts in Richtung des Bauraumes 8 verfahren, wird das zwischen den Beschichterklingen 13 befindliche Baumaterial 3 mitgezogen und je nach Abstand der Kanten 12 der Beschichterklingen 13 von der Baufläche 7 als Schicht aufgezogen.

Die in Figur 1 schematisch dargestellte Lasersinteranlage entspricht - was die Beschichtereinrichtung 9 anbelangt - einem üblichen Stand der Technik.

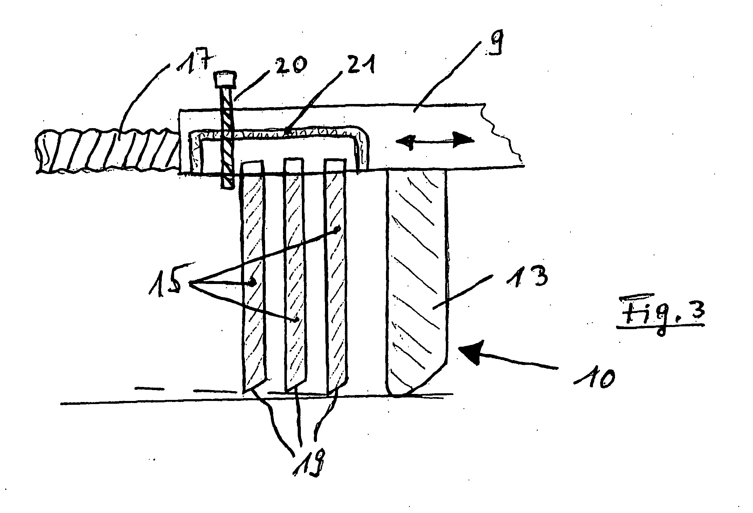

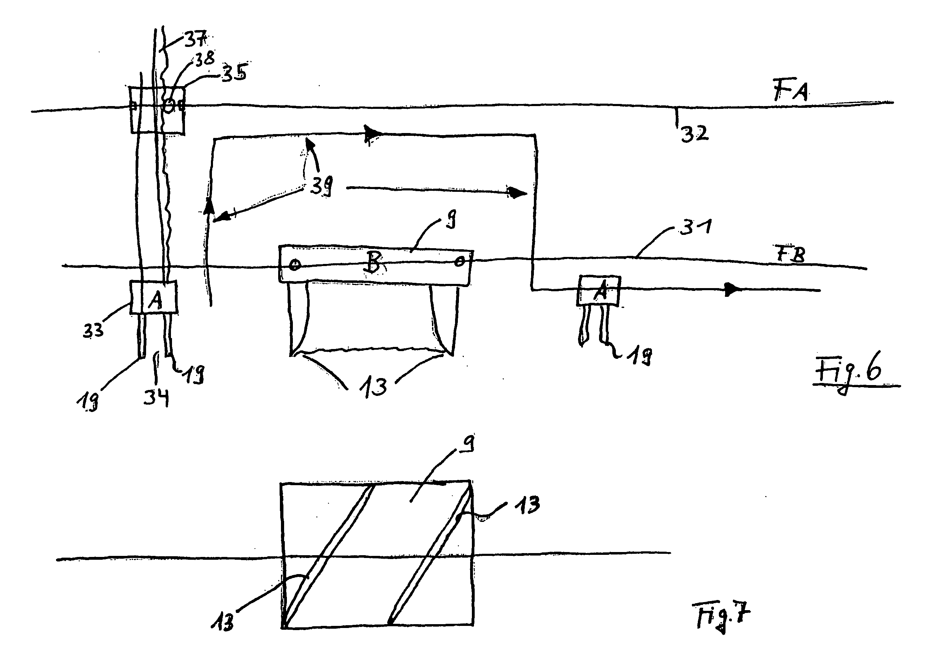

Nachfolgend wird auf die weiteren Figuren 2 - 6 Bezug genommen. Wie in Figur 2 deutlich zu sehen ist, ist die Beschichtereinrichtung 9 zusätzlich mit Abscherklingen 15 versehen, wobei beim dargestellten Ausführungsbeispiel beidseitig außerhalb der Beschichterklingen 13 jeweils eine Abscherklinge 15 zugeordnet ist. Wird nun die Beschichtereinrichtung 9 durch einen motorischen Antrieb 16 und daran angekoppelte Antriebselemente z. B. in Form einer Spindel 17 nach rechts über den Bauraum 8 verfahren, sind die Abscherklingen 15 in der Lage, auf der Baufläche 7, d. h. der Oberfläche des sich bildenden Formteils 2 nach oben vorstehende verfestigte Materialvorsprünge 18 mit ihrer geschärften Unterkante 19 abzuscheren, so daß vermieden wird, daß die Beschichterklingen 13 an den Materialvorsprüngen 18 hängen bleiben, was zu einer Verschlechterung des Beschichtungsergebnisses oder gar zu einer Beschädigung der Beschichtereinrichtung 9 führen könnte. Dabei ist bedeutungsvoll, daß die nach unten weisenden Kanten 12 etwas gerundet sind, was dem Beschichtungsergebnis zugute kommt, wohingegen die Kanten 19 der Abscherklingen 15 gehärtet und geschärft sind.

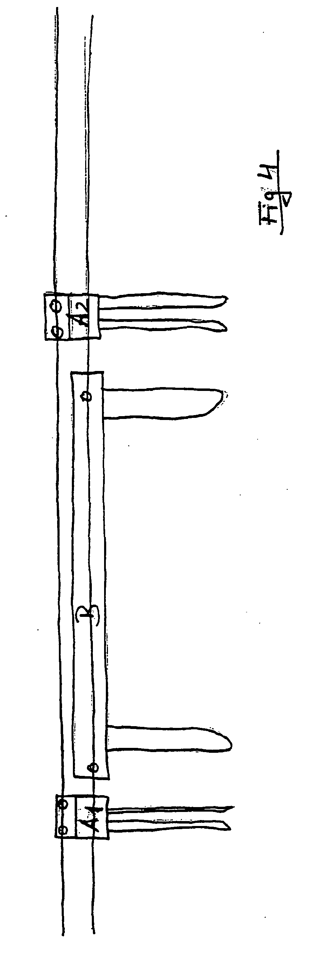

Aus Figur 3 ergibt sich, daß einer Beschichterklinge 13 eine Mehrzahl von Abscherklingen 15 zugeordnet sind, deren nach unten weisende Scherkanten 19 der Höhe nach in einem geringen Winkel gestaffelt sein können. Die nach unten weisende Kante 12 der Beschichterklinge 13 ist geringfügig tiefer angeordnet als die nach unten weisende Scherkante der Abscherklinge oder Abscherklingen. Es liegt auch im Rahmen der Erfindung, die Höhe der Abscherklingen 15 bezogen auf die Höhe der Beschichterklinge 13 verstellbar zu gestalten, was beispielsweise durch ein Verstellelement 20 vollzogen werden könnte, das von einem Trägerelement der Beschichtereinrichtung 9 einen Abscherklingenhalter durchsetzt und als Spindeltrieb ausgebildet ist.

Zwischen den Abscherklingen 19 und der Klingenanordnung 10 der Beschichterklingen 13 ist eine mechanische Dämpfungseinrichtung 21 vorgesehen, um allzu harte Schläge auf die Abscherklingen 15 nicht auf die Beschichterklinge oder Beschichterklingen 13 zu übertragen.

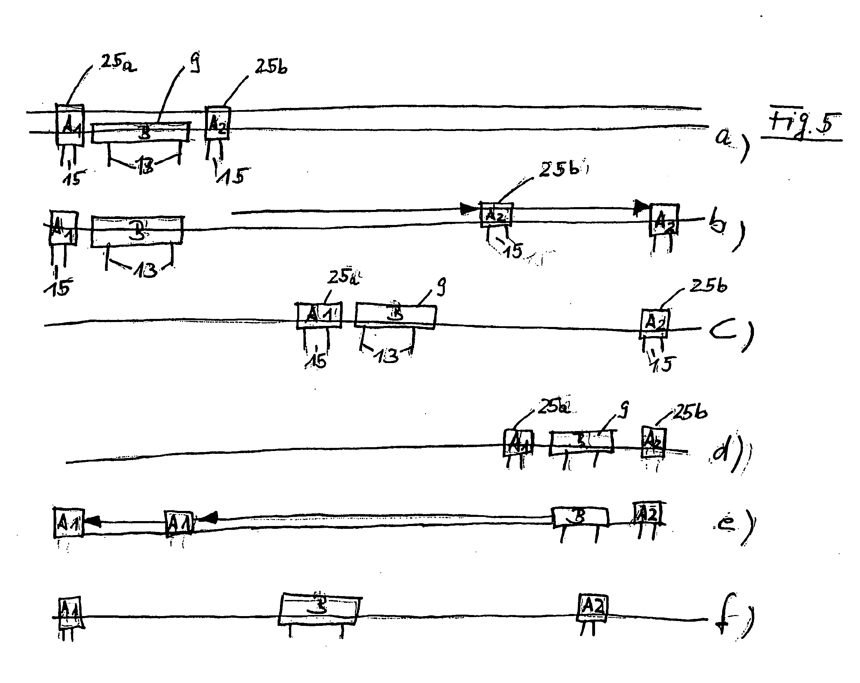

Bei dem in Figur 4 dargestellten Ausführungsbeispiel sind die Abscherklingen 15 an gesonderten Halterungen 25 mechanisch entkoppelt von der Klingenanordnung 10 der Beschichterklingen 13 verfahrbar. Bezugnehmend auf Figur 5 wird nun die Arbeitsweise einer solchen Vorrichtung dargestellt. Zunächst befindet sich die Beschichtereinrichtung 9 sowie die beiden beidseitig angeordneten Halterungen 25a, 25b der Abscherklingen 15 auf der linken Seite einer Führungsbahn 26 der Halterungen 25 und der Beschichtereinrichtung 9 (Figur 5a). Sodann wird die Halterung 25b mit den daran angeordneten Abscherklingen 15 aus der linken Position, die beispielsweise die Position über dem Vorratsbehälter 11 sein kann, nach rechts, d. h. über den Bauraum verfahren, wodurch Materialvorsprünge 18 an der Oberseite des sich bildenden Formteils 2 abgetrennt werden. Die Beschichtereinrichtung 9 ist dabei noch in Ruhe, ebenso die Halterung 25a (Figur 5b).

Sobald der Abschervorgang durch die an der Halterung 25b befestigten Abscherklingen 13 abgeschlossen ist, wird die Beschichtereinrichtung 9 aus ihrer Position über dem Vorratsbehälter 11 nach rechts über den Bauraum 8 verfahren, wodurch neues Baumaterial 3 auf die Oberfläche des Formteils 2 geschichtet wird. Unmittelbar nachfolgend oder auch separat wird dann die Halterung 25a nachgefahren. Sodann wird der Sintervorgang eingeleitet und das Baumaterial 3 ganz oder teilweise aufgeschmolzen. Sobald dies geschehen ist, wird durch die an der Halterung 25a befestigten Abscherklingen 15 ein erneuter Abschervorgang vorgenommen. Dieser Abschervorgang ist in Figur 5e dargestellt, der nachfolgende Beschichtungsvorgang in Figur 5f.

Alternativ ist es möglich, nach dem Verfahren der Beschichtereinrichtung 9 von der linken auf die rechte Seite, d. h. nach dem Aufbringen von Baumaterial 3 auf die Bauoberfläche sofort den Sintervorgang zu starten, wobei die Halterung 25a noch in der linken Position stehen bleibt. Nach dem Sintervorgang kann dann die Halterung 25a nach rechts in die in Figur 5d dargestellte Position verfahren werden und dann sofort wieder zurück, d. h. es kann ein doppelter Abschervorgang auf beiden Verfahrwegen vorgenommen werden, wobei durch geringfügige Zustellung nach der RechtsBewegung der Halterung 25a der erneute Abschervorgang etwas tiefer geht als der erste Abschervorgang. Dadurch ist ein gründlicheres Abscherergebnis möglich. Nach diesem doppelten Abschervorgang erfolgt dann ein erneuter Beschichtervorgang, wie dies in Figur 5f dargestellt ist.

Es ist nur selbstverständlich, daß auch mit den Abscherklingen 15, die an der Halterung 25b befestigt sind, entsprechende doppelte Abschervorgänge durch Links-Rechts-Bewegung der Halterung 25b nach einem Sintervorgang vorgenommen werden können.

Nachfolgend wird auf Zeichnungsfigur 6 Bezug genommen. Dort sind die Führungsbahnen 31 der Beschichtereinrichtung 9 und die Führungsbahn 32 für eine höhenverfahrbare Halterung 33 einer Abscherklingenanordnung 34 so angeordnet, daß die Halterung 33 der Abscherklingenanordnung 34 sowohl horizontal als auch vertikal verfahren werden kann. Dazu ist die Halterung 33 an einem Schlitten 35 mittels einer Höhenverstelleinrichtung 36 angeordnet, die beispielsweise eine Zahnstange 37 und ein Antriebsritzel 38 aufweisen kann. Selbstverständlich sind auch Spindelantriebe und dergleichen mit Vorteil einsetzbar. Durch die Höhenverstelleinrichtung ist es möglich, die Halterung 33 mit der Abscherklingenanordnung 34 längs eines Weges 39 über die Beschichtereinrichtung 9 hinwegzuheben, so daß die Abscherklingenanordnung 34 beidseitig der Beschichterklingen 13 eingesetzt werden kann. Die Höhenverstelleinrichtung hat dabei den zusätzlichen Vorteil, daß sie nicht nur geeignet ist, die Halterung 33 über die Beschichtereinrichtung 9 hinwegzuheben, sondern über die Höhenverstelleinrichtung auch noch eine Feinzustellung zur Vertiefung des eigentlichen Abschervorganges vorgenommen werden kann.

In Zeichnungsfigur 7 ist schematisch angedeutet, wie zwei Beschichterklingen 13 schräg zu ihrer Bewegungsbahn an der Beschichtereinrichtung 9 angeordnet werden können. Selbstverständlich sind auch andere Winkel einer Schrägstellung möglich, darüber hinaus ist es denkbar, nur eine der beiden Beschichterklingen schräg zu stellen und die andere in herkömmlicher Weise rechtwinklig bezogen auf die Bewegungsbahn der Beschichtereinrichtung anzuordnen.

Die in Zeichnungsfigur 7 dargestellte Schrägstellung kann in gleicher Weise auf die Abscherklingen angeordnet werden. Dann ergibt sich ein "ziehender Schnitt" an den Agglomeraten, was zu einer besonders materialschonenden und gründlichen Abscherung der gegebenenfalls auf der zu beschichtenden Oberfläche befindlichen Agglomerate führt.

## Patentansprüche

1. Beschichtereinrichtung (9) für eine Bauvorrichtung (1) zur Erstellung von Formteilen (2) aus Baumaterial (3) unter Einbringung von Strahlungsenergie, insbesondere für eine Lasersinteranlage oder eine Stereolithographieanlage, mit
- mindestens einer horizontal verfahrbaren Klingenanordnung (10) mit mindestens einer Beschichterklinge (13) zum Transport des Baumaterials (3) aus einem Vorratsbehälter (11) in den Bauraum (8), wobei das Baumaterial (3) durch die nach unten weisende Kante (12) der mindestens einen Beschichterklinge (13) als gleichmäßige Schicht auf einer Baufläche (7) aufbringbar ist,
**dadurch gekennzeichnet, daß**
- der Klingenanordnung (10) mindestens eine Abscherklinge (15) zugeordnet ist, die vor oder beim Beschichtungsvorgang über die Baufläche (7) verfahrbar ist.

2. Beschichtereinrichtung nach Anspruch 1,
wobei
die horizontal verfahrbare Klingenanordnung (10) in an sich bekannter Weise zwei voneinander beabstandete Beschichterklingen (13) aufweist und an der Außenseite des Beschichterklingenpaares (13) mindestens je eine Abscherklinge (15) angeordnet ist.

3. Beschichtereinrichtung nach Anspruch 1 oder 2,
wobei
jeder Beschichterklinge (13) eine Mehrzahl von Abscherklingen (15) zugeordnet ist.

4. Beschichtereinrichtung nach Anspruch 3,
wobei
die nach unten weisenden Scherkanten (19) der Mehrzahl der Abscherklingen (15) der Höhe nach gestaffelt sind.

5. Beschichtereinrichtung nach einem der vorhergehenden Ansprüche,
wobei
die nach unten weisende Kante (12) der Beschichterklinge (13) geringfügig tiefer angeordnet ist als die nach unten weisende Scherkante (19) der Abscherklinge(n) (15).

6. Beschichtereinrichtung nach einem der vorhergehenden Ansprüche,
wobei
die Höhe der Abscherklinge(n) (15) bezogen auf die Höhe der Beschichterklinge(n) (13) verstellbar ist.

7. Beschichtereinrichtung nach einem der vorhergehenden Ansprüche,
wobei
die mindestens eine Abscherklinge (15) unter Zwischenschaltung einer mechanischen Dämpfungseinrichtung (21) an der horizontal verfahrbaren Klingenanordnung (10) befestigt ist.

8. Beschichtereinrichtung nach einem der vorhergehenden Ansprüche,
wobei
die mindestens eine Abscherklinge (15) an einer gesonderten Halterung (25) mechanisch entkoppelt von der Klingenanordnung (10) der Beschichterklinge (13) verfahrbar ist.

9. Beschichtereinrichtung nach einem der vorhergehenden Ansprüche,
wobei
der Klingenanordnung (10) mit zwei Beschichterklingen (13) nur eine Abscherklinge (15) zugeordnet ist, die beidseitig außerhalb der Beschichterklingen (13) der Klingenanordnung (10) zur Voreilung in Transportrichtung des Baumaterials (3) positionierbar ist.

10. Beschichtereinrichtung nach einem der vorhergehenden Ansprüche,
wobei
das Material der mindestens einen Abscherklinge (15) eine höhere Shore-Härte aufweist als das der Beschichterklinge (13).

11. Beschichtereinrichtung nach einem der vorhergehenden Ansprüche,
wobei
die nach unten weisende Scherkante (19) der Abscherklinge (15) geschärft ist.

12. Beschichtereinrichtung nach einem der vorhergehenden Ansprüche,
wobei
die Abscherklinge (15) über die zu beschichtende Baufläche (7) verfahrbar ist, bevor die Transportbewegung der Klingenanordnung (10) mit der mindestens einen Beschichterklinge (13) einleitbar ist.

13. Beschichtereinrichtung nach einem der vorhergehenden Ansprüche,
wobei
die Abscherklinge(n) (15) austauschbar angeordnet ist (sind).

14. Beschichtereinrichtung nach einem der vorhergehenden Ansprüche,
wobei
der Antrieb der Abscherklinge(n) (15) gesondert steuerbar ist.

15. Beschichtereinrichtung nach einem der vorhergehenden Ansprüche,
wobei
die Abscherklinge (15) oder Abscherklingenanordnung (34) an einem motorisch höhenverstellbaren Abscherklingenhalter (33) befestigt ist, der an einem gesonderten, horizontal verfahrbaren Schlitten (35) gelagert ist.

16. Beschichtereinrichtung nach Anspruch 15,
wobei
die Abscherklingenanordnung (34) über der Klingenanordnung (10) der Beschichterklingen (13) horizontal verfahrbar und neben der Klingenanordnung (10) der Beschichterklingen (13) in Arbeitsposition absenkbar ist.

17. Beschichtereinrichtung nach einem der vorhergehenden Ansprüche,
wobei
die wirksame Scherkante (19) der Abscherklinge (15) bezogen auf die Bewegungsbahn der Abscherklinge (15) schräg angeordnet ist.

18. Beschichtereinrichtung (9) für eine Bauvorrichtung (1) zur Erstellung von Formteilen (2) aus Baumaterial (3) unter Einbringung von Strahlungsenergie, insbesondere für eine Lasersinteranlage oder eine Stereolithographieanlage, mit
- mindestens einer horizontal verfahrbaren Klingenanordnung (10) mit mindestens einer Beschichterklinge (13) zum Transport des Baumaterials (3) aus einem Vorratsbehälter (11) in den Bauraum (8), wobei das Baumaterial (3) durch die nach unten weisende Kante (12) der mindestens einen Beschichterklinge (13) als gleichmäßige Schicht auf einer Baufläche (7) aufbringbar ist,
**dadurch gekennzeichnet, daß**
die mindestens eine Beschichterklinge (13) als Abscherklinge dient, wobei vor dem Abschervorgang der Abstand zwischen einer wirksamen Scherkante (19) der Beschichterklinge (13) und der zu beschichtenden Oberfläche vergrößerbar ist.

19. Beschichtereinrichtung nach Anspruch 18,
wobei
die zu beschichtende Oberfläche vor dem Abschervorgang in eine abgesenkte Abscherstellung verfahrbar ist.

20. Beschichtereinrichtung nach Anspruch 18 oder 19,
wobei
die Beschichterklinge (13) vor dem Abschervorgang in eine angehobene Abscherstellung verfahrbar ist.

21. Beschichtereinrichtung nach einem der vorhergehenden Ansprüche,
wobei
die nach unten weisende Scherkante (19) der Beschichterklinge (13) geschärft ist.

22. Beschichtereinrichtung nach einem der Ansprüche 18 - 21,
wobei
die Beschichterklingen (13) motorisch verschwenkbar hinsichtlich ihres Anstellwinkels zur Bewegungsbahn der Beschichtereinrichtung (9) ausgebildet sind und beim Beschichtungsvorgang ein erster Anstellwinkel und beim Abschervorgang ein zweiter, modifizierter Anstellwinkel einstellbar ist.

23. Beschichtereinrichtung nach einem der vorhergehenden Ansprüche,
wobei
der als Scherkante (19) dienende Bereich der Beschichterklinge (13) gehärtet ist.

24. Beschichtereinrichtung nach einem der vorhergehenden Ansprüche,
wobei
der als Scherkante (19) dienende Bereich der Beschichterklinge (13) mit einer harten Beschichtung versehen ist.

25. Beschichtereinrichtung nach einem der vorhergehenden Ansprüche,
wobei
die als Abscherklinge (15) dienende Beschichterklinge (13) bezogen auf ihre Bewegungsbahn schräg angeordnet ist.

## Claims

1. Coating device (9) for a building apparatus (1) for producing moulded parts (2) formed from building material (3) by introducing radiation energy, more especially for a laser sintering system or a stereolithography system, said coating device having
- at least one horizontally displaceable blade arrangement (10) with at least one coating blade (13) for the transportation of the building material (3) from a hopper (11) into the building chamber (8), the building material (3) being applicable onto a building surface (7) as a uniform layer, by the downwardly pointing edge (12) of the at least one coating blade (13),
**characterised in that**
- at least one shearing blade (15), which is displaceable over the building surface (7) prior to or during the coating operation, is associated with the blade arrangement (10).

2. Coating device according to claim 1, wherein the horizontally displaceable blade arrangement (10) has two coating blades (13), which are spaced apart from each other, in a manner known per se, and at least one respective shearing blade (15) is disposed on the outside of the pair of coating blades (13).

3. Coating device according to claim 1 or 2, wherein a plurality of shearing blades (15) is associated with each coating blade (13).

4. Coating device according to claim 3, wherein the downwardly pointing shearing edges (19) of the plurality of shearing blades (15) are staggered according to height.

5. Coating device according to one of the preceding claims, wherein the downwardly pointing edge (12) of the coating blade (13) is disposed slightly lower than the downwardly pointing shearing edge (19) of the shearing blade(s) (15).

6. Coating device according to one of the preceding claims, wherein the height of the shearing blade(s) (15) is adjustable with respect to the height of the coating blade(s) (13).

7. Coating device according to one of the preceding claims, wherein the at least one shearing blade (15) is secured, by the interposition of a mechanical damping means (21), on the horizontally displaceable blade arrangement (10).

8. Coating device according to one of the preceding claims, wherein the at least one shearing blade (15) is displaceable on a separate holder (25), mechanically released from the blade arrangement (10) of the coating blade (13).

9. Coating device according to one of the preceding claims, wherein only one shearing blade (15) is associated with the blade arrangement (10) having two coating blades (13), which shearing blade can be positioned on both sides, externally of the coating blades (13) of the blade arrangement (10), for advancement in the transportation direction of the building material (3).

10. Coating device according to one of the preceding claims, wherein the material of the at least one shearing blade (15) has a higher Shore hardness than that of the coating blade (13).

11. Coating device according to one of the preceding claims, wherein the downwardly pointing shearing edge (19) of the shearing blade (15) is sharpened.

12. Coating device according to one of the preceding claims, wherein the shearing blade (15) is displaceable over the building surface (7) to be coated, before the transportation movement of the blade arrangement (10) with the at least one coating blade (13) can be started.

13. Coating device according to one of the preceding claims, wherein the shearing blade(s) (15) is (are) exchangeably disposed.

14. Coating device according to one of the preceding claims, wherein the drive of the shearing blade(s) (15) is separately controllable.

15. Coating device according to one of the preceding claims, wherein the shearing blade (15) or shearing blade arrangement (34) is secured on a shearing blade holder (33), which is vertically adjustable in a motive manner and is mounted on a separate, horizontally displaceable slide (35).

16. Coating device according to claim 15, wherein the shearing blade arrangement (34) is horizontally displaceable over the blade arrangement (10) of the coating blades (13), and is lowerable into the operating position adjacent the blade arrangement (10) of the coating blades (13).

17. Coating device according to one of the preceding claims, wherein the effective shearing edge (19) of the shearing blade (15) is disposed inclinedly with respect to the displacement path of the shearing blade (15).

18. Coating device (9) for a building apparatus (1) for producing moulded parts (2) formed from building material (3) by introducing radiation energy, more especially for a laser sintering system or a stereolithography system, said coating device having
- at least one horizontally displaceable blade arrangement (10) with at least one coating blade (13) for the transportation of the building material (3) from a hopper (11) into the building chamber (8), the building material (3) being applicable onto a building surface (7) as a uniform layer, by the downwardly pointing edge (12) of the at least one coating blade (13),
**characterised in that** the at least one coating blade (13) serves as a shearing blade, the spacing between an effective shearing edge (19) of the coating blade (13) and the surface to be coated being able to be enlarged prior to the shearing operation.

19. Coating device according to claim 18, wherein the surface to be coated is displaceable into a lowered shearing position prior to the shearing operation.

20. Coating device according to claim 18 or 19, wherein the coating blade (13) is displaceable into a raised shearing position prior to the shearing operation.

21. Coating device according to one of the preceding claims, wherein the downwardly pointing shearing edge (19) of the coating blade (13) is sharpened.

22. Coating device according to one of claims 18 - 21, wherein the coating blades (13) are configured to be motively pivotable regarding their angular disposition relative to the displacement path of the coating device (9), and a first angular disposition can be set during the coating operation, and a second, modified angular disposition can be set during the shearing operation.

23. Coating device according to one of the preceding claims, wherein the region of the coating blade (13) serving as the shearing edge (19) is hardened.

24. Coating device according to one of the preceding claims, wherein the region of the coating blade (13) serving as the shearing edge (19) is provided with a hard coating.

25. Coating device according to one of the preceding claims, wherein the coating blade (13), serving as the shearing blade (15), is disposed inclinedly with respect to its displacement path.

## Revendications

1. Applicateur (9) pour un dispositif (1) de production de pièces façonnées (2) à partir d'un matériau (3) en utilisant une énergie de rayonnement, en particulier pour une installation de frittage au laser ou une installation de stéréolithographie, avec
- au moins un ensemble de lame (10) pouvant être déplacé horizontalement, avec au moins une lame applicatrice (13) pour transporter le matériau (3) d'un réservoir de stockage (11) dans la chambre de production (8), sachant que le matériau (3) peut être déposé sous la forme d'une couche uniforme sur une surface de production (7) par l'arête (12), dirigée vers le bas, de la lame applicatrice (13) au moins unique,
**caractérisé en ce que**
- au moins une lame de cisaillement (15) est associée à l'ensemble de lame (10), qui peut être déplacée sur la surface de production (7) avant ou après le processus d'application.

2. Applicateur selon la revendication 1, sachant que l'ensemble de lame (10) pouvant être déplacé horizontalement présente d'une manière en soi connue deux lames applicatrices (13) mutuellement distantes, et au moins une lame de cisaillement (15) est disposée sur chaque côté extérieur de la paire de lames applicatrices (13).

3. Applicateur selon la revendication 1 ou 2, sachant qu'une pluralité de lames de cisaillement (15) est associée à chaque lame applicatrice (13).

4. Applicateur selon la revendication 3, sachant que les arêtes de cisaillement (19), dirigées vers le bas, de la pluralité de lames de cisaillement (15) sont échelonnées en hauteur.

5. Applicateur selon l'une des revendications précédentes, sachant que l'arête (12), dirigée vers le bas, de la lame applicatrice (13) est disposée légèrement plus bas que l'arête de cisaillement (19), dirigée vers le bas, de la ou des lames de cisaillement (15).

6. Applicateur selon l'une des revendications précédentes, sachant qu'il est possible de régler la hauteur de la ou des lames de cisaillement (15) par rapport à la hauteur de la ou des lames applicatrices (13).

7. Applicateur selon l'une des revendications précédentes, sachant que la lame de cisaillement (15) au moins unique est fixée sur l'ensemble de lame (10) pouvant être déplacé horizontalement avec intercalation d'un moyen d'amortissement mécanique (21).

8. Applicateur selon l'une des revendications précédentes, sachant que la lame de cisaillement (15) au moins unique peut être déplacée sur un support indépendant (25), en étant mécaniquement désaccouplée de l'ensemble (10) de lame applicatrice (13).

9. Applicateur selon l'une des revendications précédentes, sachant qu'une seule lame de cisaillement (15) est associée à l'ensemble de lame (10) pourvu de deux lames applicatrices (13), laquelle peut être positionnée de part et d'autre à l'extérieur des lames applicatrices (13) de l'ensemble de lame (10) de manière à les précéder dans la direction de transport du matériau (3).

10. Applicateur selon l'une des revendications précédentes, sachant que le matériau de la lame de cisaillement (15) au moins unique présente une dureté Shore supérieure à celui de la lame applicatrice (13).

11. Applicateur selon l'une des revendications précédentes, sachant que l'arête de cisaillement (19), dirigée vers le bas, de la lame de cisaillement (15) est biseautée.

12. Applicateur selon l'une des revendications précédentes, sachant que la lame de cisaillement (15) peut être déplacée au-dessus de la surface de production à revêtir (7) avant que le mouvement de transport de l'ensemble de lame (10) pourvu de la lame applicatrice (13) au moins unique puisse être déclenché.

13. Applicateur selon l'une des revendications précédentes, sachant que la ou les lames de cisaillement (15) sont disposées avec possibilité de remplacement.

14. Applicateur selon l'une des revendications précédentes, sachant que l'entraînement de la ou des lames de cisaillement (15) peut être commandé de manière indépendante.

15. Applicateur selon l'une des revendications précédentes, sachant que la lame de cisaillement (15) ou l'ensemble (34) de lames de cisaillement est fixé sur un élément porteur (33) de lame de cisaillement verticalement mobile de façon motorisée, qui est monté sur un chariot indépendant (35) pouvant être déplacé horizontalement.

16. Applicateur selon la revendication 15, sachant que l'ensemble (34) de lames de cisaillement peut être déplacé horizontalement au-dessus de l'ensemble (10) de lames applicatrices (13) et peut être abaissé en position de travail à côté de l'ensemble (10) de lames applicatrices (13).

17. Applicateur selon l'une des revendications précédentes, sachant que l'arête de cisaillement active (19) de la lame de cisaillement (15) est disposée en oblique par rapport à la trajectoire de déplacement de la lame de cisaillement (15).

18. Applicateur (9) pour un dispositif (1) de production de pièces façonnées (2) à partir d'un matériau (3) en utilisant une énergie de rayonnement, en particulier pour une installation de frittage au laser ou une installation de stéréolithographie, avec
- au moins un ensemble de lame (10) pouvant être déplacé horizontalement, avec au moins une lame applicatrice (13) pour transporter le matériau (3) d'un réservoir de stockage (11) dans la chambre de production (8), sachant que le matériau (3) peut être déposé sous la forme d'une couche uniforme sur une surface de production (7) par l'arête (12), dirigée vers le bas, de la lame applicatrice (13) au moins unique,
**caractérisé en ce que**
la lame applicatrice (13) au moins unique sert de lame de cisaillement, sachant qu'avant le processus de cisaillement, la distance entre une arête de cisaillement active (19) de la lame applicatrice (13) et la surface à revêtir peut être augmentée.

19. Applicateur selon la revendication 18, sachant que la surface à revêtir peut être déplacée avant le processus de cisaillement dans une position de cisaillement abaissée.

20. Applicateur selon la revendication 18 ou 19, sachant que la lame applicatrice (13) peut être déplacée avant le processus de cisaillement dans une position de cisaillement relevée.

21. Applicateur selon l'une des revendications précédentes, sachant que l'arête de cisaillement (19), dirigée vers le bas, de la lame applicatrice (13) est biseautée.

22. Applicateur selon l'une des revendications 18 à 21, sachant que les lames applicatrices (13) sont conçues à pivotement motorisé quant à leur angle d'inclinaison par rapport à la trajectoire de déplacement de l'applicateur (9), et un premier angle d'inclinaison peut être réglé lors du processus d'application et un deuxième angle d'inclinaison, modifié, lors du processus de cisaillement.

23. Applicateur selon l'une des revendications précédentes, sachant que la région de la lame applicatrice (13) qui sert d'arête de cisaillement (19) est trempée.

24. Applicateur selon l'une des revendications précédentes, sachant que la région de la lame applicatrice (13) qui sert d'arête de cisaillement (19) est pourvue d'un revêtement dur.

25. Applicateur selon l'une des revendications précédentes, sachant que la lame applicatrice (13) servant de lame de cisaillement (15) est disposée en oblique par rapport à sa trajectoire de déplacement.
